# EUROPEAN PATENT SPECIFICATION

(11) **EP 2 207 041 B1**
(45) Date of publication and mention of the grant of the patent: **11.07.2012**
(21) Application number: 10150286.2
(22) Date of filing: 08.01.2010
(51) Int. Cl.: H02P 29/02, G01R 19/165, H02H 6/00, H02H 7/085

(54) **Motor overload protecting method**
Motorüberlastungsschutzverfahren
Procédé de protection du moteur contre la surcharge

(30) Priority: 09.01.2009 CN 200910000797
(43) Date of publication of application: 14.07.2010
(73) Proprietor: Byd Company Limited, Shenzhen 518118 (CN)
(72) Inventor: Tang, Xiaohua, 518118 Shenzhen (CN); Du, Zhiyong, 518118 Shenzhen (CN); Luo, Ting, 518118 Shenzhen (CN)
(74) Representative: Gulde Hengelhaupt Ziebig & Schneider

(56) References cited:
- EP-A- 0 019 885
- EP-A- 0 445 315
- JP-A- 6 022 444
- US-A1- 2002 128 785

## Description

### BACKGROUND OF THE INVENTION

### FIELD OF THE INVENTION

The present invention relates to a motor overload protecting method, in particular the present invention relates to a control method for protecting motor when the motor of the electric vehicle is peremptorily overloaded.

### BACKGROUND OF THE RELATED ART

Electric motors are widely used in various fields. An electric motor is a motor that uses electrical energy to produce mechanical energy, usually through the interaction of magnetic fields and current-carrying conductors. Sometimes an electric motor does not work under the rated power and is thereby overloaded. The motor may be ruined when the motor is overheated. The heat is however not generated instantly. Accordingly, the motor is not instantly overloaded but the motor is overloaded during a certain period of time.

In the prior art, motors have different anti-overload capacities which operate under different ranges of current. Conventionally, a mechanical overload relay is used for protecting a motor from being ruined when the motor is overloaded. The mechanical overload relay is adapted to stop an electric power supply when a current value is bigger than the current extremum value. However, protecting a motor according to this method is disadvantageous in that it depends on the hardware and the hardware is generally ageing or generating chemical reactions, thereby resulting in protection invalidation when using a fixed current extremum value.

Another conventional method for protecting a motor uses a current generating device which generates a current for controlling motor. The current generating device forecasts the absolute or relative time value determined by the present current value. The absolute or relative time value is used for generating control information to control motor. However, protecting a motor according to this method is disadvantageous in that the motor cannot be controlled precisely by forecasting the time.

European Paten Application EP 0 445 315 A 1 discloses an overload protecting method, wherein an overload signal can be increased or decreased during a predetermined time period according to the value of the input current.

US Patent Application 2002/0128785 discloses an overload protecting method for an electric motor comprising the calculation of a fold-back factor for adjusting the input current according to a charge accumulation value.

### SUMMARY OF THE INVENTION

The present invention provides a motor overload protecting method to protect the motor from being ruined when the current fluctuates in a great range.

According to claim 1, the overload protecting method for an electric motor, comprises: driving an electric motor by applying an electric current, wherein the intensity of the electric current is controlled according to an input value; and
(a) continuously detecting a real-time current value applied to the motor, and repetitively calculating a current integral value during consecutive integral periods and resetting the calculated current integral value to be zero at the end of each integral period, wherein the integral period ranges between 10-100 milliseconds;
(b) if the calculated current integral value is bigger than or equal to a predetermined upper integral limit, obtaining an overload coefficient according to the calculated current integral value, wherein the overload coefficient is bigger than or equal to zero and less than one when the calculated current integral value is bigger than or equal to the predetermined upper integral limit;
(c) obtaining a new input value by multiplying the input value by the obtained overload coefficient and driving the electric motor to operate under the new input value.

Preferably, the overload coefficient is obtained from a reference table in accordance with the calculated current integral value. Preferably step (b) further comprises: recording a maximum current integral value from the plurality of calculated current integral values, wherein the maximum current integral value is the highest value among the plurality of calculated current integral values, and setting the calculated current integral value as the maximum current integral value if the calculated current integral value is bigger than or equal to the predetermined upper integral limit and obtaining the overload coefficient according to the maximum current integral value.

Preferably step (b) further comprises diminishing the overload coefficient if the present calculated current integral value is less than or equal to the maximum current integral value and if the present calculated current integral value is bigger than or equal to the predetermined upper integral limit. Preferably the overload coefficient is diminished by a revising value which is less than the overload coefficient and is bigger than or equal to zero. Preferably the revising value is obtained from a reference table. Preferably the revising value decreases when the overload coefficient increases and the revising value increases when the overload coefficient decreases.

Preferably the method further comprises: (d) the overload coefficient is gradually renewed to be one in a predetermined recovery time interval if the calculated current integral value is always less than the predetermined upper integral limit during the predetermined recovery time interval, wherein the predetermined recovery time interval is at least as long as one integral period. Preferably the predetermined recovery time interval ranges between 30-300 milliseconds. Preferably the predetermined recovery time interval increases when the maximum current integral value increases and the predetermined recovery time interval decreases when the maximum current integral value decreases.

Preferably the method further comprises: (e) turning off the electric motor if the calculated current integral value at the end of the integral period is within a period of 10 seconds more than 2000 times bigger than or equal to the predetermined upper integral limit or if the overload coefficient is renewed to be one more than 10 times for overload protection within a period of 2 minutes.

Preferably the number of detected real-time current values during each integral period ranges between 1 to 500, more preferably between 2 to 100, more preferably between 2 to 50 and still more preferably between 2 to 20.

Preferably the input value according to which the intensity of the electric current is controlled is one selected from the current of the motor, the voltage of the motor and the power of the motor stator.

The expression "input value" is understood as a current that drives the motor, a voltage that drives the motor or a power that drives the motor. The voltage and the power are determined by the current. For example, when the current value is I, the voltage value is U, the power value is P and the resistance of the electric motor is R, then said value can be determined by equation U=I*R or P=I*I*R, respectively. The expression "continuously detecting a real-time current value applied to the motor" is understood in that an instantaneous motor current value is detected in real-time. According to the present invention, one integral period directly follows after another, i.e. the operation of the motor is divided into a plurality of adjacent integral periods. Furthermore the overload coefficient is obtained from a reference table which is preferably stored in a motor management system. The overload coefficient, which is less than 1 in case of an overload situation (current integral value greater than predetermined integral extremum value) reduces the real-time current for driving the motor thereby avoiding overheating. Preferably, the steps (a) to (e) are preferably carried out in alphabetical order.

According to another aspect of the present invention, the motor overload protecting method, comprising: (a) detecting the motor current real-timely, calculating the current integral value in every integral period and resetting the current integral value to be zero at the end of the integral period; (b) obtaining the overload coefficient according to the current integral value, which is bigger than or equal to zero and less than one when the current integral value is bigger than or equal to the current extremum (also referred to as "predetermined upper integral limit") and is equal to one when the current integral value is less than the current extremum, wherein the current extremum is the ultimate current integral value when the motor works normally; (c) obtaining a new input value by multiplying the input value relative to the motor operation by the overload coefficient and actuating the motor to operate under the new input value. The method according to the present invention can precisely control the motor and protects the motor from being burned when the motor is overloaded. Preferably, the steps (a) to (c) are preferably carried out in alphabetical order.

The motor overload protecting method according the present invention can protect the motor more effectively. It can be avoided that the motor be ruined because of the heat resulted from overload of the motor. Also, the current of big value generated by intruder can be filtrated to avoid the misoperation of the motor. Further, the overload coefficient can be adjusted according to the current integral value to control the input of the motor more precisely. The method is simpler and agiler. It does not depend on the hardware. The motor can be protected more effectively and would not be ruined because of the heat resulted from overload of the motor.

### BRIEF DESCRIPTION OF THE DRAWINGS

The aforementioned features and advantages of the invention as well as additional features and advantages thereof will be more clearly understood hereinafter as a result of a detailed description of embodiments when taken in conjunction with the drawings.
Fig.1 is the flow chart illustrating the motor overload protecting method of the present invention.
Fig.2 is the flow chart illustrating a preferred embodiment of the present invention.

### DESCRIPTION OF THE EMBODIMENT

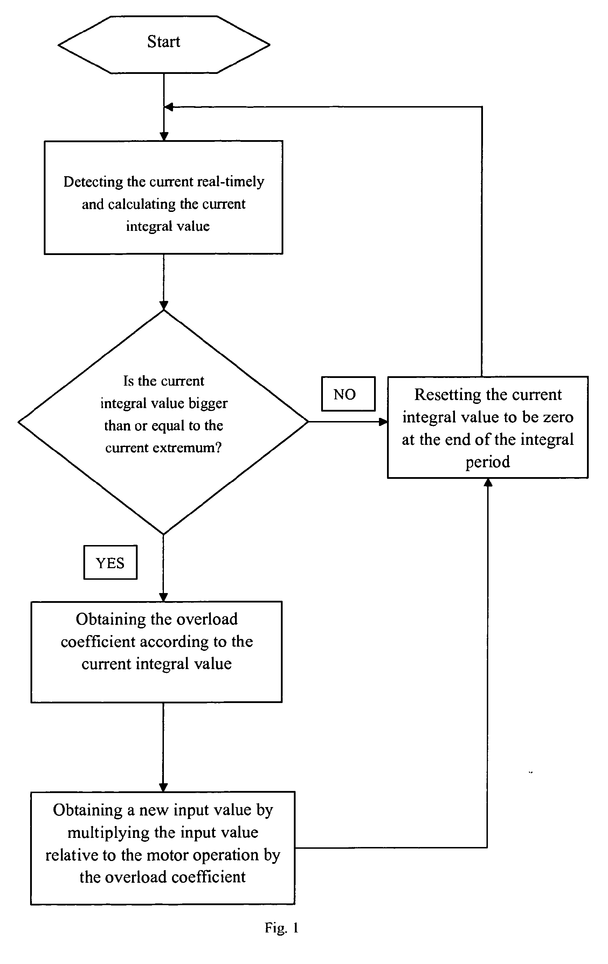

As shown in Fig.1, the motor overload protecting method comprises: driving an electric motor by applying an electric current, wherein the intensity of the electric current is controlled according to an input value; and
(a) detecting the motor current real-timely, calculating the current integral value in every integral period and resetting the current integral value to be zero at the end of the integral period; (b) obtaining the overload coefficient according to the current integral value, which is bigger than or equal to zero and less than one when the current integral value is bigger than or equal to the predetermined upper integral limit and is equal to one when the current integral value is less than the predetermined upper integral limit, wherein the predetermined upper integral limit is the ultimate current integral value when the motor works normally; (c) obtaining a new input value by multiplying the input value relative to the motor operation by the overload coefficient and actuating the motor to operate under the new input value.

In step (a), the motor current is real-timely detected and the current integral value is calculated in every integral period. If the current integral value is less than the predetermined upper integral limit in an integral period, namely the motor is not overloaded, reset the current integral value to be zero and turn to another integral period. If the current integral value is bigger than or equal to the predetermined upper integral limit, namely the motor is overloaded, then turn to step (b). As the motor current is real-timely detected, it can be avoid that the motor be ruined because of the heat resulted from overload of the motor. Also, the current of big value generated by intruder can be filtrated to avoid the misoperation of the motor.

In step (b), if the current integral value is bigger than or equal to the predetermined upper integral limit, obtain the overload coefficient according to the current integral value when the current integral value is bigger than or equal to the predetermined upper integral limit. The input of the motor is controlled by adjusting the overload coefficient according to the current integral value.

According to a preferred embodiment of the present invention, the step (b) comprising: setting the maximal current integral value as the maximum of the current integral value whenever the current integral value is bigger than or equal to the predetermined upper integral limit and obtaining the overload coefficient according to the maximum of the current integral value. Whenever the current integral value is bigger than or equal to the predetermined upper integral limit, obtain the renewed overload coefficient according to the maximum of the current integral value real-timely to control the input of the motor.

Concretely, when the motor is overloaded, the maximum of the current integral value is recorded and compared with the current integral value in the present integral period. The bigger one is set as the renewed maximum of the current integral value. When the present integral period is over, reset the current integral value to be zero, save the renewed maximum of the current integral value and turn to the next integral period. Whenever the motor is overloaded, the current integral value is real-timely compared with the maximum of the current integral value. If the current integral value is bigger than the maximum of the current integral value, the current integral value is set as the renewed maximum of the current integral value. If the current integral value is less than or equal to the maximum of the current integral value, the maximum of the current integral value is not changed.

The overload coefficient is looked up in the tabulation which is built up by experiments and is about the relationship between the current integral value and the overload coefficient and the relationship between the current integral value and the overload cooling time (also referred to as "predetermined recovery time interval").

As a preferred embodiment of the present invention, the step (b) further comprising: diminishing the overload coefficient if the present current integral value is less than or equal to the maximum of the current integral value and is bigger than or equal to the predetermined upper integral limit. And the diminishing range of the overload coefficient is a revising value, the revising value is less than the overload coefficient and is bigger than or equal to zero, the revising value diminishes when the overload coefficient increases and the revising value increases when the overload coefficient diminishes. For example, when the overload coefficient is 0.8, the revising value is 0.02. When the overload coefficient is 0.4, the revising value is 0.1. Thus the current can be diminished to be less than the predetermined upper integral limit in the least time.

In step (c), a new input value is obtained by multiplying the input value relative to the motor operation by the overload coefficient and the motor is actuated to operate under the new input value. The motor current is diminished by multiplying the input value by the overload coefficient so that the motor is not overloaded. The inputs of the motor are the current, the voltage or the power of the motor rotor.

The preferred range of the integral period is 10-100 milliseconds.

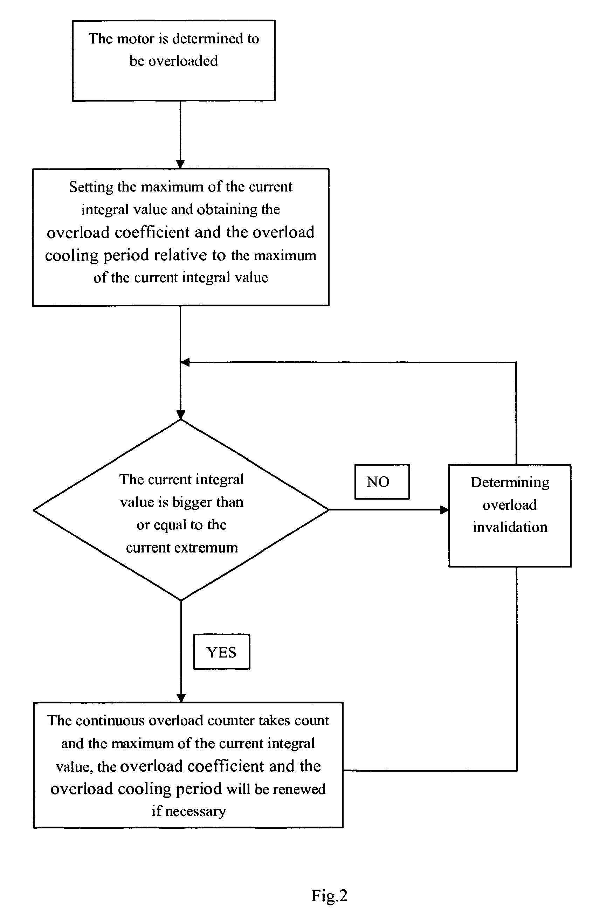

Fig.2 is the flow chart illustrating a preferred embodiment of the present invention. As shown in Fig.2, the motor current integral value of three phases is detected real-timely. If the current integral value is bigger than or equal to the predetermined upper integral limit, the current integral value is set as the maximum of the current integral value and the motor is determined to be overloaded. The continuous overload counter begins to take count. At the same time, the present current integral value is compared with the maximum of the current integral value in the continuous detection. Whenever the present current integral value is bigger than the maximum of the current integral value, the present current integral value is set as the renewed maximum of the current integral value and the overload coefficient is looked up in the tabulation. If the present current integral value is less than or equal to the maximum of the current integral value and bigger than or equal to the predetermined upper integral limit, the maximum of the current integral value is not renewed and the overload coefficient subtracts a revising value which is described before.

As shown in Fig. 2, the motor current integral value of three phases is detected real-time. If the current integral value is larger than or equal to the maximum motor current value, the current integral value is set as the maximum of the current integral value and the motor is determined to be overloaded. A continuous overload counter begins to count. At the same time, the present current integral value is compared with the maximum of the current integral value in the continuous detection. When the present current integral value is larger than the maximum of the current integral value, the present current integral value is set as the renewed maximum of the current integral value, and the overload coefficient is looked up in the table. If the present current integral value is less than or equal to the maximum of the current integral value and larger than or equal to the maximum motor current value, the maximum of the current integral value is not renewed and the overload coefficient is reduced by the revised value described above.

As a preferred embodiment of the present invention, the method further comprising: (d) the overload coefficient is renewed to one in 30-300 milliseconds if the current integral value is always less than the predetermined upper integral limit in the predetermined overload cooling period (also referred to as "predetermined recovery time interval"), the predetermined overload cooling period is at least as long as one integral period, wherein the predetermined overload cooling period increases when the maximum of the current integral value increases and the predetermined overload cooling period diminishes when the maximum of the current integral value diminishes. Thus the overload coefficient can be reset when the motor is working stably and the motor is protected. If the motor is overloaded again in the predetermined overload cooling period, the overload cooling period is set as the renewed predetermined overload cooling period. The aforesaid steps are repeated and overload cooling begins until the current integral value is less than the predetermined upper integral limit. If the current integral value is always less than the predetermined upper integral limit, reset the overload coefficient to be one in 30-300 milliseconds. The overload protection process is over.

As a preferred embodiment of the present invention, the method further comprising: (e) turning off the motor if the current integral value at the end of the integral period is bigger than or equal to the predetermined upper integral limit more than 2000 times in 10 seconds or if the overload coefficient is renewed to one more than 10 times for overload protection in 2 minutes. Namely, it is to determine overload invalidation, shown in Fig.2. The determining of overload invalidation is done through the operation to determine to turn off the motor or not.

As a preferred embodiment of the present invention, a continuous overload counter and an overload counter are used for recording the overload times. The continuous overload counter is used for recording how many times the current integral value is bigger than or equal to the predetermined upper integral limit when the integral period is over. The overload counter is used for recording how many times the function of overload protection acts until the overload coefficient is reset to be one. The continuous overload counter adds one if the current integral value is bigger than or equal to the predetermined upper integral limit when the integral period is over. As a preferred embodiment, the motor is turned off if the value of the continuous overload counter is bigger than 2000 in 10 seconds. Otherwise, the continuous overload counter is reset to be zero. When the function of overload protection acts, if the current integral value is less than the predetermined upper integral limit, the continuous current counter is reset to be zero. The detection goes on. If the overload coefficient is reset to be one, the overload protecting process is over and the overload counter adds one. Namely, the overload counter is used for recording how many times the overload protection ends. If the value of overload counter is bigger than ten in two minutes, the motor is turned off to check whether the motor conks out. Otherwise, the overload counter is reset to be zero. The aforesaid values of the time and time are just for example and depend on the motor system

The motor overload protecting method according the present invention can protect the motor more effectively. It can avoid that the motor be ruined because of the heat resulted from overload of the motor. Also, the current of big value generated by intruder can be filtrated to avoid the misoperation of the motor. Further, the overload coefficient can be adjusted according to the current integral value to control the input of the motor more precisely. The method is simpler and agiler. It does not depend on the hardware. The motor can be protected more effectively and would not be ruined because of the heat resulted from overload of the motor.

The following table 1 discloses preferred relationships between the (calculated) current integral values, the obtained overload coefficients (in accordance to the calculated current integral value), the overload cooling time (also referred to as "predetermined recovery time interval") and the respective revising value.

**Table 1:**

| current integral value | overload coefficient | overload cooling time | revising value |
|---|---|---|---|
| 600A | 0,8 | at least 1s | 0,02 |
| 800A | 0,5 | at least 1s s | 0,1 |
| 850A | 0 | at least 3s | 0,5 |

The principles of the preferred embodiment described herein is therefore illustrative and not restrictive, the scope of the invention being indicated in the appended claims and all variations which come within the scope of the claims are intended be embraced therein.

## Claims

1. An overload protecting method for an electric motor, comprising: driving an electric motor by applying an electric current, wherein the intensity of the electric current is controlled according to an input value; and
(a) continuously detecting a real-time current value applied to the motor, and repetitively calculating a current integral value during consecutive integral periods and resetting the calculated current integral value to be zero at the end of each integral period, wherein the integral period ranges between 10-100 milliseconds;
(b) if the calculated current integral value is bigger than or equal to a predetermined upper integral limit, obtaining an overload coefficient according to the calculated current integral value, wherein the overload coefficient is bigger than or equal to zero and less than one when the calculated current integral value is bigger than or equal to the predetermined upper integral limit;
(c) obtaining a new input value by multiplying the input value by the obtained overload coefficient and driving the electric motor to operate under the new input value.

2. The method according to claim 1, wherein the overload coefficient is obtained from a reference table in accordance with the calculated current integral value, the reference table containing a relationship between overload coefficient and current integral value.

3. The method according to any one of the preceding claims, wherein step (b) further comprises:
recording a maximum current integral value from the plurality of calculated current integral values, wherein the maximum current integral value is the highest value among the plurality of calculated current integral values, and
setting the calculated current integral value as the maximum current integral value if the calculated current integral value is bigger than or equal to the predetermined upper integral limit and obtaining the overload coefficient according to the maximum current integral value.

4. The method according to claim 3, wherein the step (b) further comprises:
diminishing the overload coefficient if the present calculated current integral value is less than or equal to the maximum current integral value and if the present calculated current integral value is bigger than or equal to the predetermined upper integral limit.

5. The method according to claim 4, wherein the overload coefficient is diminished by a revising value, wherein the revising value is less than the overload coefficient and bigger than or equal to zero.

6. The method according to claim 5, wherein the revising value is obtained from a reference table, the reference table containing a relationship between overload coefficient and revising value.

7. The method according to any one of claims 5 and 6, wherein the revising value decreases when the overload coefficient increases and the revising value increases when the overload coefficient decreases.

8. The method according to any one of the preceding claims, wherein the method further comprising:
(d) the overload coefficient is gradually renewed to be one in a predetermined recovery time interval if the calculated current integral value is always less than the predetermined upper integral limit during the predetermined recovery time interval, wherein the predetermined recovery time interval is at least as long as one integral period.

9. The method according to claim 8, wherein the predetermined recovery time interval ranges between 30-300 milliseconds.

10. The method according to any one of claims 8 and 9, wherein the predetermined recovery time interval increases when the maximum current integral value increases and the predetermined recovery time interval decreases when the maximum current integral value decreases.

11. The method according to any one of the preceding claims, wherein the method further comprising:
(e) turning off the electric motor if the calculated current integral value at the end of the integral period is within a period of 10 seconds more than 2000 times bigger than or equal to the predetermined upper integral limit or if the overload coefficient is renewed to be one more than 10 times for overload protection within a period of 2 minutes.

12. The method according to any one of the preceding claims, wherein the number of detected real-time current values during each integral period ranges between 2 to 50.

13. The method according to one of the preceding claims, wherein the input value according to which the intensity of the electric current is controlled is one selected from the current of the motor, the voltage of the motor and the power of the motor stator.

## Patentansprüche

1. Überlastungsschutzverfahren für einen elektrischen Motor, umfassend folgende Schritte: Antreiben eines elektrischen Motors durch Anwenden eines elektrischen Stromes, wobei die elektrische Stromstärke entsprechend einem Eingangswert gesteuert wird; und
a. kontinuierliches Erfassen eines auf den Motor angewandten Echtzeit-Stromwertes und wiederholtes Berechnen eines Stromintegralwertes während aufeinanderfolgender Integralperioden und Zurücksetzen des errechneten Stromintegralwertes auf Null am Ende jeder Integralperiode, wobei die Integralperiode 10 - 100 Millisekunden beträgt;
b. falls der errechnete Stromintegralwert größer als oder so groß wie eine vorgegebene obere Integralgrenze ist, Erhalten eines Überlastkoeffizienten entsprechend dem errechneten Stromintegralwert, wobei der Überlastkoeffizient größer als oder gleich Null und kleiner als einer ist, wenn der errechnete Stromintegralwert größer als oder so groß wie die vorgegebene obere Integralgrenze ist;
c. Erhalten eines neuen Eingangswertes durch Multiplizieren des Eingangswertes mit dem erhaltenen Überlastkoeffizienten und Antreiben des elektrischen Motors, um ihn nach dem neuen Eingangswert zu betreiben.

2. Verfahren nach Anspruch 1, wobei der Überlastkoeffizient aus einer Referenztabelle entsprechend dem errechneten Stromintegralwert erhalten wird, wobei die Referenztabelle ein Verhältnis zwischen Überlastkoeffizient und Stromintegralwert enthält.

3. Verfahren nach einem der vorangehenden Ansprüche, wobei Schritt (b) ferner Folgendes umfasst:
Aufzeichnen eines maximalen Stromintegralwertes aus einer Mehrzahl errechneter Stromintegralwerte, wobei der maximale Stromintegralwert der höchste Wert aus der Mehrzahl errechneter Stromintegralwerte ist, und
Einstellen des errechneten Stromintegralwert als den maximalen Stromintegralwert, falls der errechnete Stromintegralwert größer als oder so groß wie die vorgegebene obere Integralgrenze ist, und Erhalten des Überlastkoeffizienten entsprechend dem maximalen Stromintegralwert.

4. Verfahren nach Anspruch 3, wobei der Schritt (b) ferner Folgendes umfasst:
Verringern des Überlastkoeffizienten, falls der gegenwärtige errechnete Stromintegralwert kleiner als oder so groß wie der maximale Stromintegralwert ist und falls der gegenwärtige errechnete Stromintegralwert größer als oder so groß wie die vorgegebene obere Integralgrenze ist.

5. Verfahren nach Anspruch 4, wobei der Überlastkoeffizient durch einen Korrekturwert verringert wird, wobei der Korrekturwert kleiner als der Überlastkoeffizient und größer als oder gleich Null ist.

6. Verfahren nach Anspruch 5, wobei der Korrekturwert aus einer Referenztabelle erhalten wird, wobei die Referenztabelle ein Verhältnis zwischen Überlastkoeffizient und Korrekturwert enthält.

7. Verfahren nach einem der Ansprüche 5 und 6, wobei der Korrekturwert abnimmt, wenn der Überlastkoeffizient zunimmt, und der Korrekturwert zunimmt, wenn der Überlastkoeffizient abnimmt.

8. Verfahren nach einem der vorangehenden Ansprüche, wobei das Verfahren ferner Folgendes umfasst:
d. der Überlastkoeffizient wird in einem vorgegebenen Erholungszeitintervall graduell erneuert, um eins zu sein, falls der errechnete Stromintegralwert während des vorgegebenen Erholungszeitintervalls stets kleiner als die vorgegebene obere Integralgrenze ist, wobei das vorgegebene Erholungszeitintervall mindestens so lang wie eine Integralperiode ist.

9. Verfahren nach Anspruch 8, wobei das vorgegebene Erholungszeitintervall 30 - 300 Millisekunden beträgt.

10. Verfahren nach einem der Ansprüche 8 und 9, wobei das vorgegebene Erholungszeitintervall zunimmt, wenn der maximale Stromintegralwert zunimmt, und das vorgegebene Erholungszeitintervall abnimmt, wenn der maximale Stromintegralwert abnimmt.

11. Verfahren nach einem der vorangehenden Ansprüche, wobei das Verfahren ferner Folgendes umfasst:
e. Abschalten des elektrischen Motors, falls der errechnete Stromintegralwert am Ende der Integralperiode innerhalb eines Zeitraumes von 10 Sekunden über 2.000 Mal größer als oder so groß wie die vorgegebene obere Integralgrenze ist oder falls der Überlastkoeffizient zum Überlastschutz innerhalb eines Zeitraumes von 2 Minuten über 10 Mal erneuert wird, um eins zu sein.

12. Verfahren nach einem der vorangehenden Ansprüche, wobei die Anzahl der erfassten Echtzeit-Stromwerte während jeder Integralperiode 2 bis 50 beträgt.

13. Verfahren nach einem der vorangehenden Ansprüche, wobei der Eingangswert, nach dem die Stromstärke gesteuert wird, der Strom des Motors, die Spannung des Motors oder die Leistung des Motorstators ist.

## Revendications

1. Procédé de protection d'un moteur électrique contre la surcharge comprenant les étapes suivantes : entraîner un moteur électrique en appliquant un courant électrique, l'intensité du courant électrique étant contrôlée selon une valeur d'entrée; et
a. détecter de manière continue une valeur de courant en temps réel appliquée au moteur et calculer de manière répétitive une valeur intégrale de courant pendant des périodes intégrales consécutives et remettre la valeur intégrale de courant calculée à zéro à la fin de chaque période intégrale, la période intégrale variant entre 10 et 100 millisecondes;
b. si la valeur intégrale de courant calculée est supérieure ou égale à une limite intégrale supérieure prédéterminée, obtenir un coefficient de surcharge selon la valeur intégrale de courant calculée, le coefficient de surcharge étant supérieur ou égal à zéro et inférieur à un quand la valeur intégrale de courant calculée est supérieure ou égale à la limite intégrale supérieure prédéterminée;
c. obtenir une nouvelle valeur d'entrée en multipliant la valeur d'entrée par le coefficient de surcharge obtenu et entraîner le moteur électrique afin de l'opérer sous la nouvelle valeur d'entrée.

2. Procédé selon la revendication 1, dans lequel le coefficient de surcharge est obtenu d'un tableau de référence selon la valeur intégrale de courant calculée, le tableau de référence contenant une relation entre coefficient de surcharge et valeur intégrale de courant.

3. Procédé selon l'une des revendications précédentes, dans lequel l'étape (b) comprend en outre les étapes suivantes :
enregistrer une valeur intégrale de courant maximale provenant de la pluralité de valeurs intégrales de courant calculées, la valeur intégrale de courant maximale étant la valeur maximale parmi la pluralité de valeurs intégrales de courant calculées et
instaurer la valeur intégrale de courant calculée en tant que la valeur intégrale de courant maximale, si la valeur intégrale de courant calculée est supérieure ou égale à la limite intégrale supérieure prédéterminée et obtenir le coefficient de surcharge selon la valeur intégrale de courant maximale.

4. Procédé selon la revendication 3, dans lequel l'étape (b) comprend en outre les étapes suivantes :
diminuer le coefficient de surcharge si la présente valeur intégrale de courant calculée est inférieure ou égale à la valeur intégrale de courant maximale et si la présente valeur intégrale de courant calculée est supérieure ou égale à la limite intégrale supérieure prédéterminée.

5. Procédé selon la revendication 4, dans lequel le coefficient de surcharge est diminué d'une valeur de révision, la valeur de révision étant inférieure au coefficient de surcharge et supérieure ou égale à zéro.

6. Procédé selon la revendication 5, dans lequel la valeur de révision est obtenue d'un tableau de référence, le tableau de référence contenant une relation entre coefficient de surcharge et valeur de révision.

7. Procédé selon l'une des revendications 5 et 6, dans lequel la valeur de révision diminue quand le coefficient de surcharge augmente et la valeur de révision augmente quand le coefficient de surcharge diminue.

8. Procédé selon l'une des revendications précédentes, le procédé comprenant en outre l'étape suivante :
d. le coefficient de surcharge est graduellement renouvelé afin d'en être un dans un intervalle de temps de rétablissement prédéterminé si la valeur intégrale de courant calculée est toujours inférieure à la limite intégrale supérieure prédéterminée pendant l'intervalle de temps de rétablissement prédéterminé, la durée de l'intervalle de temps de rétablissement prédéterminé étant au moins égale à celle d'une période intégrale.

9. Procédé selon la revendication 8, dans lequel l'intervalle de temps de rétablissement prédéterminé varie entre 30 et 300 millisecondes.

10. Procédé selon l'une des revendications 8 et 9, dans lequel l'intervalle de temps de rétablissement prédéterminé augmente quand la valeur intégrale de courant maximale augmente et l'intervalle de temps de rétablissement prédéterminé diminue quand la valeur intégrale de courant maximale diminue.

11. Procédé selon l'une des revendications précédentes, dans lequel le procédé comprend en outre l'étape suivante :
e. arrêter le moteur électrique si, à la fin de la période intégrale, la valeur intégrale de courant calculée est de 2.000 fois supérieure ou égale à la limite intégrale supérieure prédéterminée dans un délai de 10 secondes ou si le coefficient de surcharge est renouvelé plus souvent que 10 fois dans un délai de 2 minutes afin d'en être un pour la protection contre la surcharge.

12. Procédé selon l'une des revendications précédentes, dans lequel le nombre de valeurs de courant en temps réel détectées pendant chaque période intégrale varie entre 2 et 50.

13. Procédé selon l'une des revendications précédentes, dans lequel la valeur d'entrée, selon laquelle l'intensité du courant électrique est contrôlée, est choisie parmi le courant du moteur, la tension du moteur et la puissance du stator du moteur.
